# EUROPÄISCHE PATENTANMELDUNG

(11) **EP 1 666 285 A2**
(43) Veröffentlichungstag der Anmeldung: **07.06.2006**
(21) Anmeldenummer: 05109689.9
(22) Anmeldetag: 18.10.2005
(51) Int. Cl.: B60H 1/00

(54) **Klimatisierungsvorrichtung und Verfahren zum Betreiben einer Klimatisierungsvorrichtung**

(30) Priorität: 06.12.2004 DE 102004058694
(71) Anmelder: ROBERT BOSCH GMBH, 70442 Stuttgart (DE)
(72) Erfinder: Kaefer, Oliver, 71711 Murr (DE)

(57) **Zusammenfassung**

Die Erfindung geht aus von einer Klimatisierungsvorrichtung, insbesondere zur Klimatisierung eines Fahrzeuginnenraums (17), mit einem Strömungskanal (10), in dem ein Gebläse (11), ein Verdampfer (12) und ein Wärmetauscher (13) angeordnet sind.

Es wird vorgeschlagen, dass Umlenkmittel (14, 15) zur Umlenkung einer Strömungsrichtung (16) von Zuluft so vorgesehen sind, dass wahlweise ein Hauptströmungspfad der Zuluft von einer Zuluftanströmseite (20) durch einen Adsorber (18) oder den Wärmetauscher (13) führt.

Die Erfindung betrifft ferner ein Verfahren zum Betreiben einer Klimatisierungsvorrichtung.

## Beschreibung

### Stand der Technik

Die Erfindung geht aus von einer Klimatisierungsvorrichtung und einem Verfahren zum Betreiben einer Klimatisierungsvorrichtung nach dem Oberbegriff der unabhängigen Ansprüche.

Klimatisierungsvorrichtungen, insbesondere solche zur Klimatisierung eines Fahrzeuginnenraums, verfügen üblicherweise über einen so genannten Klimakasten, in dem ein Gebläse, ein Wärmeübertrager zum Kühlen bzw. Entfeuchten, beispielsweise ein Verdampfer, und ein Wärmetauscher zum Heizen angeordnet sind. Der Wärmetauscher ist dabei an einen Kühlkreislauf eines Verbrennungsmotors angeschlossen, und der Verdampfer ist an einen Kältemittelkreislauf der Klimatisierungsvorrichtung angeschlossen.

Bei den bekannten Klimatisierungsvorrichtungen wird die Klimaanlage teilweise auch zum Zuheizen genutzt, da beispielsweise insbesondere Dieselmotoren nicht genügend Abwärme zur Verfügung stellen, um im Winter den Fahrzeuginnenraum auch zu beheizen. In diesem Heizmodus wird der Verdampfer in einem so genannten Heißgasprozess als Heizelement benutzt. Da der Verdampfer jedoch im Normalbetrieb als Klimaanlage zum Kühlen und Entfeuchten des Fahrzeuginnenraums dient, wird im Heizbetrieb die Feuchtigkeit aus dem Verdampfer in den Innenraum geleitet. Dies führt zu einem unangenehmen, so genannten Waschküchenklima mit einem muffigen Geruch und zu einem Beschlagen der Scheiben.

Es ist bereits vorgeschlagen worden, einen zusätzlichen Wärme-übertrager bereitzustellen, um diese negativen Begleiterscheinungen zu unterbinden. Dies hat den Nachteil, dass ein weiteres Bauelement im Kühlmittelkreislauf und Kältekreislauf zur Verfügung gestellt werden muss. Neben dem zusätzlich benötigten Bau- und Anschlussraum stellt der zusätzliche Wärmeübertrager im Kühlkreislauf zudem einen zusätzlichen Strömungswiderstand dar, was insbesondere bei zukünftigen Kühlsystemen mit elektrischen Wasserpumpen nachteilig ist.

In der Offenlegungsschrift DE 197 12 134 A1 wird ein System vorgeschlagen, welches einen Adsorber zur Entfeuchtung der Zuluft in den Innenraum vorsieht. Um diesen Adsorber zu regenerieren, wird ein elektrisch beheiztes Element bereitgestellt. Um dieses Element zu beheizen, ist eine hohe Menge an elektrischer Energie erforderlich, was energetisch nachteilig ist. Zudem ist zu berücksichtigen, dass heutige Fahrzeugbordnetze bereits an ihrer Leistungsgrenze arbeiten. Ferner muss der Adsorber kontinuierlich um eine Achse gedreht werden, um einzelne Flächen zu desorbieren.

Vorteile der Erfindung

Bei der erfindungsgemäßen Klimatisierungsvorrichtung, insbesondere einer solchen zur Klimatisierung eines Fahrzeuginnenraums, sind Umlenkmittel zur Umlenkung einer Strömungsrichtung von Zuluft so vorgesehen, dass wahlweise ein Hauptströmungspfad der Zuluft von einer Zuluftanströmseite her durch einen Adsorber oder einen Wärmetauscher führt. Die Zuluft kann sowohl Außenluft als auch Umluft sein. Durch einfaches Umschalten der Strömungsrichtung der Zuluft kann der Adsorber mit erwärmter Luft beaufschlagt werden, womit ein Desorptionsprozess gesteuert werden kann. Es ist dabei von Vorteil, dass keine zusätzliche elektrische Energie aufgewendet werden muss. Auch der Einsatz eines zusätzlichen Heizelements zur Desorption erübrigt sich. Durch die gewährleistete Entfeuchtung kann der Verdampfer günstigerweise als Heizelement genutzt werden, ohne dass die Gefahr eines Beschlagens der Scheiben auftritt. Insgesamt kann somit auf einfache Art und Weise ein Luftmassenstrom in einem Fahrzeug entfeuchtet werden.

Weitere Ausgestaltungen der Erfindung sind in den Unteransprüchen beschrieben.

Als Umlenkmittel sind bevorzugt schwenkbare Luftverteilungselemente vorgesehen. Besonders bevorzugt sind die Umlenkmittel als Klappen, beispielsweise Jalousienklappen, ausgebildet. Die Strömungsrichtung der Zuluft kann dadurch besonders einfach und effizient umgelenkt werden.

Vorzugsweise ist der Strömungskanal so ausgebildet ist, dass von der Zuluftanströmseite her durch den Wärmetauscher durchtretende Zuluft zwangsweise durch den Adsorber in einen Innenraum, insbesondere einen Fahrzeuginnenraum, geleitet wird, und von der Zuluftanströmseite her durch den Adsorber durchtretende Zuluft zwangsweise durch den Wärmetauscher in den Innenraum führbar ist.

In einer bevorzugten Ausgestaltung der erfindungsgemäßen Klimatisierungsvorrichtung kann stromab des Adsorbers und des Wärmetauschers ein Gehäuse so angeordnet sein, dass von der Zuluftanströmseite her durch den Adsorber durchtretende Zuluft in den Wärmetauscher und von der Zuluftanströmseite her durch den Wärmetauscher durchtretende Zuluft in den Adsorber führbar ist.

Je nach Bedarf kann somit Zuluft entfeuchtet werden, beispielsweise wenn die Klimatisierungsvorrichtung zuvor, z.B. bei einer vorangegangenen Fahrt, im Kühlmodus betrieben worden ist und sich am Verdampfer Feuchtigkeit abgesetzt hat. Durch das zwangsweise Umschalten der Strömungsrichtung der mit Feuchtigkeit beladenen Zuluft kann diese zunächst über den Adsorber geführt werden, der "beladen" wird und somit die Zuluft in den Innenraum entfeuchtet, bevor diese durch den Wärmetauscher geleitet wird. Das Entstehen des unangenehmen Waschküchenklimas wird somit vorteilhafterweise unterbunden.

Während des Betriebs des Fahrzeugs erwärmt sich das Kühlmittel. Ab einer bestimmten Temperatur ist dann ein Zuheizen nicht mehr erforderlich. Durch die erfindungsgemäße Klimatisierungsvorrichtung kann vom Heiz- in den Kühlmodus geschaltet werden. In diesem so genannten "Reheat-Modus" wird die Zuluft am Verdampfer abgekühlt und am Wärmetauscher erwärmt. Um den Adsorber zu desorbieren, kann erfindungsgemäß die Reihenfolge der Durchströmung von Adsorber und Wärmetauscher auf einfache Art und Weise verändert werden, ohne dass ein zusätzliches Bauelement oder ein zusätzlicher energetischer Aufwand erforderlich ist.

Es kann auch vorgesehen sein, dass bei entsprechender Ausgestaltung der Luftkanäle und Luftverteilungselemente ein Teil der Zuluft ohne Umweg über den Adsorber vom Wärmetauscher in den Innenraum leitbar ist. Es kann dabei ein Gehalt an Luftfeuchtigkeit im Innenraum effizient geregelt werden, indem trockene und feuchte Zuluft gemischt werden.

Um die Klimatisierungsvorrichtung zu regeln, können in dem Strömungskanal zweckmäßigerweise ein Temperatursensor und/oder ein Feuchtigkeitssensor angeordnet sein, in deren Abhängigkeit die Luftverteilungselemente ansteuerbar sind. Es ist auch denkbar, die Regelung in Abhängigkeit einer Luftfeuchte im Fahrzeuginnenraum auszuführen. Dazu ist zweckmäßigerweise ein Feuchtigkeitssensor im Fahrzeuginnenraum vorgesehen.

In einem vereinfachten System kann auch vorgesehen sein, dass die Luftverteilungselemente in einem Zeittakt angesteuert werden, wobei der Strömungsweg der Zuluft beispielsweise in regelmäßigen Zeitintervallen zwischen dem Wärmetauscher und dem Adsorber umgeschaltet wird.

Bei dem erfindungsgemäßen Verfahren zum Betreiben einer Klimatisierungsvorrichtung wird ein Strömungsweg der Zuluft durch den Wärmetauscher und einen Adsorber abhängig von Betriebsbedingungen der Klimatisierungsvorrichtung umgeschaltet.

Bevorzugt wird dabei der Strömungsweg der Zuluft durch Luftverteilungselemente umgeschaltet, die beispielsweise als Klappen, insbesondere als Jalousienklappen ausgebildet sein können. Dadurch ist eine besonders effiziente Feinabstimmung des Strömungswegs der Zuluft möglich.

Durch den Adsorber kann durch das erfindungsgemäße Verfahren ein Desorptionsprozess gesteuert werden, der im Heizmodus einer Klimaanlage durchgeführt werden kann. Es kann auch vorgesehen sein, dass der Desorptionsprozess in einem Umluftbetrieb durchgeführt wird. Der Umluftbetrieb kann zur energetisch günstigeren Aufheizung des Innenraums genutzt werden. Der Umluftbetrieb kann aber auch erforderlich sein, wenn das Eindringen von Luftschadstoffen in den Fahrzeuginnenraum unterbunden werden soll, beispielsweise beim Durchfahren eines Tunnels.

Insgesamt kann durch die erfindungsgemäße Klimatisierungsvorrichtung der Verdampfer als Heizelement genutzt werden, ohne dass sich die Scheiben des Fahrzeugs beschlagen, und der Luftfeuchtigkeitsgehalt im Fahrzeuginnenraum kann auf einfache Art und Weise geregelt werde, ohne dass ein zusätzliches Heizelement und ein zusätzlicher energetischer Aufwand erforderlich ist.

### Zeichnung

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von in einer Zeichnung dargestellten Ausführungsbeispielen der Erfindung.

Im Folgenden zeigen:
- Fig.1: eine schematische Darstellung eines Ausführungsbeispiels einer erfindungsgemäßen Klimatisierungsvorrichtung;
- Fig. 2: die Klimatisierungsvorrichtung nach Figur 1 bei zwangsweiser Führung von Zuluft in den Adsorber;
- Fig. 3: die Klimatisierungsvorrichtung nach Figur 2 bei zwangsweiser Führung von Zuluft in den Wärmetauscher;
- Fig. 4: ein weiteres Ausführungsbeispiel einer Klimatisierungsvorrichtung; und
- Fig.5: ein weiteres, alternatives Ausführungsbeispiel einer Klimatisierungsvorrichtung.

### Beschreibung der Ausführungsbeispiele

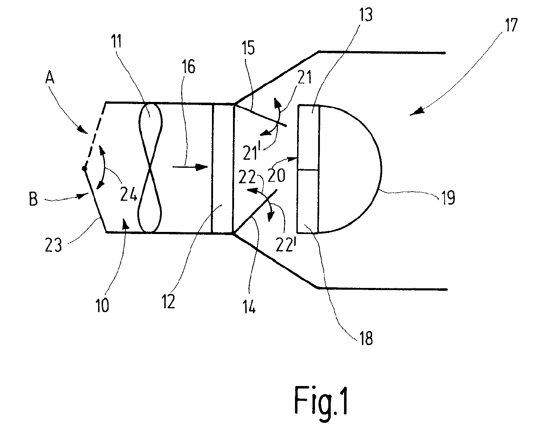

Figur 1 zeigt eine schematische Darstellung eines Ausführungsbeispiels einer erfindungsgemäßen Klimatisierungsvorrichtung mit einem Strömungskanal 10, in dem ein Gebläse 11, ein Verdampfer 12 und ein Wärmetauscher 13 angeordnet sind.

Gleiche Elemente werden jeweils in den Figuren mit gleichen Referenznummern bezeichnet.

Je nach Stellung eines als Klappe 23 ausgestalteten Luftverteilungselements, das entlang einer mit einem Pfeil gekennzeichneten Schwenkrichtung 24 schwenkbar ist, wird entweder von außen zugeführte Außenluft A oder Umluft B in den Strömungskanal 10 eingeleitet. In Folge wird die Außenluft A bzw. die Umluft B der Einfachheit halber nur mit Zuluft bezeichnet. Die Zuluft wird entlang einer Strömungsrichtung 16 über das Gebläse 11 durch den an einen nicht gezeigten Kältemittelkreislauf angeschlossenen Verdampfer 12 zu einem parallel angeordneten Wärmetauscher 13 und ein Adsorber 18 in einen Fahrzeuginnenraum 17 geführt. Je nach Ausgestaltung stromab des Hauptströmungspfads der Zuluft A oder Umluft B ist hinter dem Wärmetauscher 13 und ein Adsorber 18 ein Gehäuse 19 angeordnet. Das Einströmen der Zuluft in den Fahrzeuginnenraum 17 ist durch als Luftverteilungselemente 14, 15 ausgestaltete Umlenkmittel umlenkbar. Diese befinden sich bezogen auf den Strömungskanal 10 seitlich und stromab des Verdampfers 12. Die Luftverteilungselemente 14, 15 sind jeweils als Klappen ausgestaltet, die entlang einer Schwenkrichtung 21, 21' bzw. 22, 22' schwenkbar sind. Die Luftverteilungselemente 14, 15 sind so ausgebildet, dass wahlweise ein Hauptströmungspfad der Zuluft von einer Zuluftanströmseite 20 durch den Wärmetauscher 13 oder den Adsorber 18 geführt wird. In dem Strömungskanal 10 kann ein nicht gezeigter Temperatursensor und/oder ein Feuchtigkeitssensor angeordnet sein, in dessen Abhängigkeit die Luftverteilungselemente 14, 15 ansteuerbar sind. Der Feuchtigkeitssensor ist vorteilhafterweise hinter dem Adsorber 18 angeordnet. Die Luftverteilungselemente 14, 15 können auch in einem Zeittakt angesteuert werden. Ein vom Temperatursensor und/oder vom Feuchtigkeitssensor abgegebenes Signal wird zur Berechnung eines Sollwerts für eine Stellung der Luftverteilungselemente 14, 15 einem nicht dargestellten Steuergerät zugeführt.

Im Normalbetrieb der Klimatisierungsvorrichtung wird der Fahrzeuginnenraum 17 gekühlt und entfeuchtet. Es setzt sich dabei am Verdampfer 12 Feuchtigkeit ab.

Wenn nun die Klimatisierungsvorrichtung anschließend in einen Heizmodus betrieben wird, wird der Verdampfer 12 selbst in einem so genannten Heizgasprozess als Heizelement genutzt. Die sich zuvor im Verdampfer 12 abgesetzte Feuchtigkeit der Zuluft würde im Heizmodus bei der in der Figur 1 gezeigten Stellung der Luftverteilungselemente 14, 15 in den Innenraum 17 gelangen. Ohne weitere Maßnahmen würde sich dabei ein unangenehmes Waschküchenklima im Fahrzeuginnenraum 17 bilden, wobei sich auch die Scheiben beschlagen.

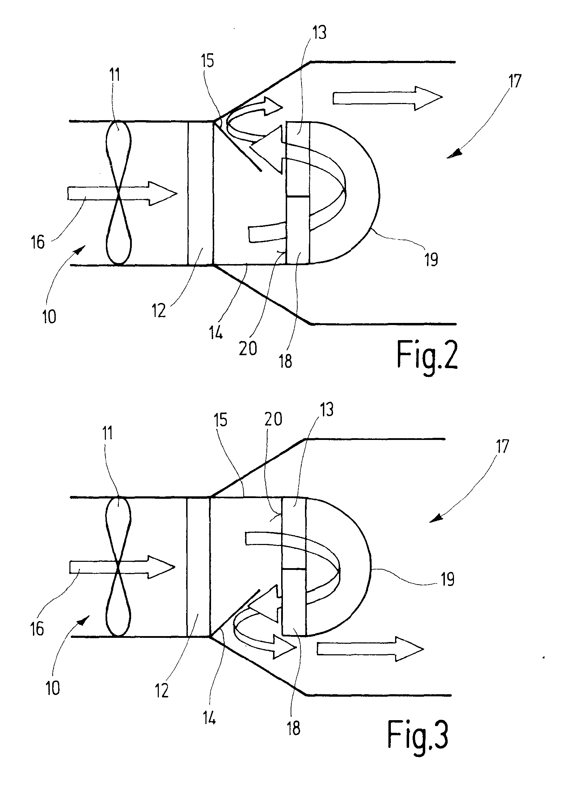

Figur 2 zeigt eine Klimatisierungsvorrichtung, die im Wesentlichen dem Aufbau der Ausführungsform in Figur 1 entspricht. Jedoch befindet sich das Luftverteilungselement 14 in einer anderen Position als in der Figur 1, wobei es gegenüber der Stellung in Figur 1 entlang der Schwenkrichtung 22' geschwenkt ist und somit bewirkt, dass die Zuluft von einer Zuluftanströmseite 20 her zwangsweise durch den Adsorber 18 in ein Gehäuse 19 geleitet wird. Das Gehäuse 19 ist dabei stromab des Adsorbers 18 so angeordnet, dass die von der Zuluftanströmseite 20 her durch den Adsorber 18 durchtretende Zuluft in den Wärmetauscher 13 geführt wird. Das Luftverteilungselement 15 befindet sich in Grundstellung gemäß Figur 1. Der Strömungskanal 10 ist dabei so ausgebildet, dass von der Zuluftanströmseite 20 her durch den Adsorber 18 durchtretende Zuluft zwangsweise durch den Wärmetauscher 13 in den Innenraum 17 geführt wird. Die Zuluftanströmseite 20 variiert in den Figuren je nach Stellung der Luftverteilungselemente 14, 15.

Bei der in Figur 2 gezeigten Stellung der Luftverteilungselemente 14, 15 wird zunächst der Adsorber 18 beladen, wobei ein Desorptionsprozess gesteuert wird und die entfeuchtete Zuluft über den Wärmetauscher in den Innenraum 17 tritt. Das Entstehen des oben geschilderten Waschküchenklimas wird dadurch vermieden, und die Scheiben bleiben frei. Der Desorptionsprozess kann im Heizmodus einer Klimaanlage durchgeführt werden. Der Desorptionsprozess kann jedoch nach Bedarf, beispielsweise beim Durchfahren eines Tunnels, in einem Umluftbetrieb durchgeführt werden.

Während des Betriebs des Fahrzeugs erwärmt sich das Kühlmittel. Ab einer bestimmten Temperatur ist ein Zuheizen nicht mehr erforderlich. Es kann dann wiederum vom Heiz- in den Kühlmodus, in den so genannten "Reheat-Modus" der Klimatisierungsvorrichtung geschaltet werden.

Figur 3 zeigt eine im Reheat-Modus betriebene Klimatisierungsvorrichtung, die im Aufbau der Ausführungsform in Figur 1 entspricht mit geänderter Stellung der Luftverteilungselemente 14, 15. Im Reheat-Modus wird die Zuluft am Verdampfer 12 abgekühlt und am Wärmetauscher 13 erwärmt. Um den Adsorber 18 zu desorbieren, wird die Reihenfolge der Durchströmung von Zuluft des Adsorbers 18 und des Wärmetauschers 13 gegenüber der Darstellung in Figur 2 verändert. Durch eine Rückstellung des Luftverteilungselements 14 in eine in Figur 1 gezeigte Normalposition und Schwenkung des Luftverteilungselements 15 entlang der Schwenkrichtung 21 und die Anordnung des Gehäuses 19 ist der Strömungskanal 10 so ausgebildet, dass von der Zuluftanströmseite 20 her durch den Wärmetauscher 13 durchtretende Zuluft zwangsweise durch den Adsorber 18 in den Innenraum 17 geführt wird.

Es wird somit warme, trockene Zuluft über den Adsorber 18 geführt. Hierbei gibt dieser die zuvor aufgenommene Feuchtigkeit wieder ab.

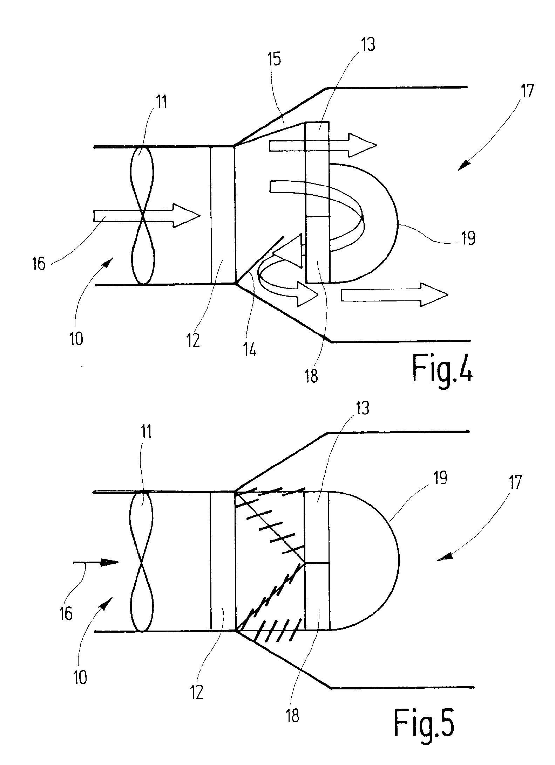

Figur 4 zeigt eine weitere Ausführungsform der erfindungsgemäßen Klimatisierungsvorrichtung. Die Position der Luftverteilungselemente 14, 15 ist dabei so ausgerichtet und das Gehäuse 19 ist dabei so angeordnet, dass ein Teil der Zuluft ohne Umweg von der Zuluftanströmseite 20 her über den Wärmetauscher 13 in den Innenraum 17 geleitet wird. Somit kann die Beaufschlagung des Innenraums 17 mit Feuchtigkeit besonders effizient geregelt werden.

Figur 5 zeigt ein weiteres, alternatives Ausführungsbeispiel einer Klimatisierungsvorrichtung, die im Wesentlichen dem Aufbau der in Figur 1 gezeigten Darstellung entspricht. Lediglich die Luftverteilungselemente 14, 15 sind als jeweils zweiteilige Jalousienklappen ausgebildet, wobei die Stellung der einzelnen Jalousien verändert werden kann und somit ein Strömungsweg der Zuluft durch den Wärmetauscher 13 und den Adsorber 18 abhängig von Betriebsbedingungen der Klimatisierungsvorrichtung umgeschaltet wird. Es ist somit eine besonders günstige Feinabstimmung des Strömungswegs der Zuluft in den Fahrzeuginnenraum 17 möglich.

## Patentansprüche

1. Klimatisierungsvorrichtung, insbesondere zur Klimatisierung eines Fahrzeuginnenraums (17), mit einem Strömungskanal (10), in dem ein Gebläse (11), ein Verdampfer (12) und ein Wärmetauscher (13) angeordnet sind, **dadurch gekennzeichnet, dass** Umlenkmittel (14, 15) zur Umlenkung einer Strömungsrichtung (16) von Zuluft so vorgesehen sind, dass wahlweise ein Hauptströmungspfad der Zuluft von einer Zuluftanströmseite (20) durch einen Adsorber (18) oder den Wärmetauscher (13) führt.

2. Klimatisierungsvorrichtung nach Anspruch 1, **dadurch gekennzeichnet, dass** die Umlenkmittel (14, 15) als schwenkbare Luftverteilungselemente ausgebildet sind.

3. Klimatisierungsvorrichtung nach Anspruch 1 oder 2, **dadurch gekennzeichnet, dass** die Umlenkmittel (14, 15) als Klappen ausgebildet sind.

4. Klimatisierungsvorrichtung nach Anspruch 2 oder 3, **dadurch gekennzeichnet, dass** der Strömungskanal (10) so ausgebildet ist, dass von der Zuluftanströmseite (20) her durch den Wärmetauscher (13) durchtretende Zuluft zwangsweise durch den Adsorber (18) in einen Innenraum (17) und von der Zuluft-anströmseite her durch den Adsorber (18) durchtretende Zuluft zwangsweise durch den Wärmetauscher (13) in den Innenraum (17) führbar ist.

5. Klimatisierungsvorrichtung nach einem der vorhergehenden Ansprüche, **dadurch gekennzeichnet, dass** stromab des Adsorbers (18) und des Wärmetauschers (13) ein Gehäuse (19) so angeordnet ist, dass von der Zuluftanströmseite (20) her durch den Adsorber (18) durchtretende Zuluft in den Wärmetauscher (13) und von der Zuluftanströmseite (20) her durch den Wärmetauscher (13) durchtretende Zuluft in den Adsorber (18) führbar ist.

6. Klimatisierungsvorrichtung nach einem der vorhergehenden Ansprüche, **dadurch gekennzeichnet, dass** ein Teil der Zuluft ohne Umweg von der Zuluftanströmseite (20) her über den Wärmetauscher (13) in den Innenraum (17) leitbar ist.

7. Klimatisierungsvorrichtung nach einem der vorhergehenden Ansprüche, **dadurch gekennzeichnet, dass** in dem Strömungskanal (10) wenigstes ein Temperatursensor und/oder wenigstens ein Feuchtigkeitssensor angeordnet ist, in dessen Abhängigkeit die Luftverteilungselemente (14, 15) ansteuerbar sind.

8. Klimatisierungsvorrichtung nach Anspruch 7, **dadurch gekennzeichnet, dass** ein vom Temperatursensor und/oder vom Feuchtigkeitssensor abgegebenes Signal zur Berechnung eines Sollwerts für eine Stellung der Luftverteilungselemente (14, 15) einem Steuergerät zuführbar ist.

9. Verfahren zum Betreiben einer Klimatisierungsvorrichtung, insbesondere zur Klimatisierung eines Fahrzeuginnenraums (17), mit einem Strömungskanal (10), in dem ein Gebläse (11), ein Verdampfer (12) und ein Wärmetauscher (13) angeordnet sind, **dadurch gekennzeichnet, dass** ein Strömungsweg der Zuluft durch den Wärmetauscher (13) und einen Adsorber (18) abhängig von Betriebsbedingungen der Klimatisierungsvorrichtung umgeschaltet wird.

10. Verfahren nach Anspruch 9, **dadurch gekennzeichnet, dass** der Strömungsweg der Zuluft durch Luftverteilungselemente (14, 15) umgeschaltet wird.

11. Verfahren nach Anspruch 10, **dadurch gekennzeichnet, dass** die Luftverteilungselemente (14, 15) in einem Zeittakt angesteuert werden.

12. Verfahren nach einem der Ansprüche 9 bis 11, **dadurch gekennzeichnet, dass** durch den Adsorber (18) ein Desorptionsprozess gesteuert wird.

13. Verfahren nach Anspruch 12, **dadurch gekennzeichnet, dass** der Desorptionsprozess im Heizmodus einer Klimaanlage durchgeführt wird.

14. Verfahren nach Anspruch 12 oder 13, **dadurch gekennzeichnet, dass** der Desorptionsprozess in einem Umluftbetrieb durchgeführt wird.
